# EUROPÄISCHE PATENTSCHRIFT

(11) **EP 2 983 926 B1**
(45) Veröffentlichungstag und Bekanntmachung des Hinweises auf die Patenterteilung: **03.05.2017**
(21) Anmeldenummer: 14714568.4
(22) Anmeldetag: 18.02.2014
(51) Int. Cl.: B60D 1/06

(54) **HOCHLASTZUGÖSE**
HIGH-LOAD TOWING EYE
ANNEAU DE COUPLAGE POUR CHARGES ÉLEVÉES

(30) Priorität: 09.04.2013 AT 2682013
(43) Veröffentlichungstag der Anmeldung: 17.02.2016
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte KG
(86) Internationale Anmeldenummer: PCT/AT2014/000033
(87) Internationale Veröffentlichungsnummer: WO 2014/165869

(56) Entgegenhaltungen:
- EP-A2- 2 269 844
- WO-A1-2005/044601
- DE-U1-202006 007 049
- US-A1- 2012 098 236

## Beschreibung

Die Erfindung betrifft eine Hochlastzugöse für einen Fahrzeuganhänger gemäß dem Oberbegriff des Patentanspruches 1, der beispielsweise in der EP 2 269 844 A2 gezeigt wird.

Derartige Hochlastzugösen werden insbesondere bei landwirtschaftlichen Fahrzeugen verwendet. Dabei sind von den Hochlastzugösen hohe Kräfte zu übertragen, beispielsweise kann die Stützlast mehrere Tonnen und die Masse des Fahrzeuganhängers mehr als zwanzig Tonnen betragen. Für den Einsatz im Gelände ist es ebenfalls wünschenswert, dass das Kupplungssystem große Neigewinkel ermöglicht.

Aufgabe der Erfindung ist es daher eine Hochlastzugöse der eingangs genannten Art anzugeben, mit welcher große Neigewinkel ermöglicht werden und eine hohe Zuverlässigkeit gegeben ist.

Erfindungsgemäß wird dies durch die Merkmale des Patentanspruches 1 erreicht. Mit dem Kragen kann sichergestellt werden, dass auch bei einem leichten Abheben der Hochlastzugöse von der Kupplungskugel noch ein Großkreis der Kupplungskugel mit der Hochlastzugöse in Kontakt ist. Es hat sich gezeigt, dass die Zuverlässigkeit der Hochlastzugöse durch eine Verringerung der Höhe des Kragens an der zweiten Seite erhalten werden kann, jedoch eine Steigerung des erreichbaren Neigewinkels erreicht werden kann.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsformen beispielhaft dargestellt ist, näher beschrieben. Dabei zeigt:
Fig. 1 eine Hochlastzugöse in Schrägansicht;
Fig. 2 die Hochtastzugöse gemäß Fig. 1 in Seitenansicht;
Fig. 3 die Hochlastzugöse gemäß Fig. 1 in Frontsicht;
Fig. 4 die Hochlastzugöse gemäß Fig. 1 in Draufsicht;

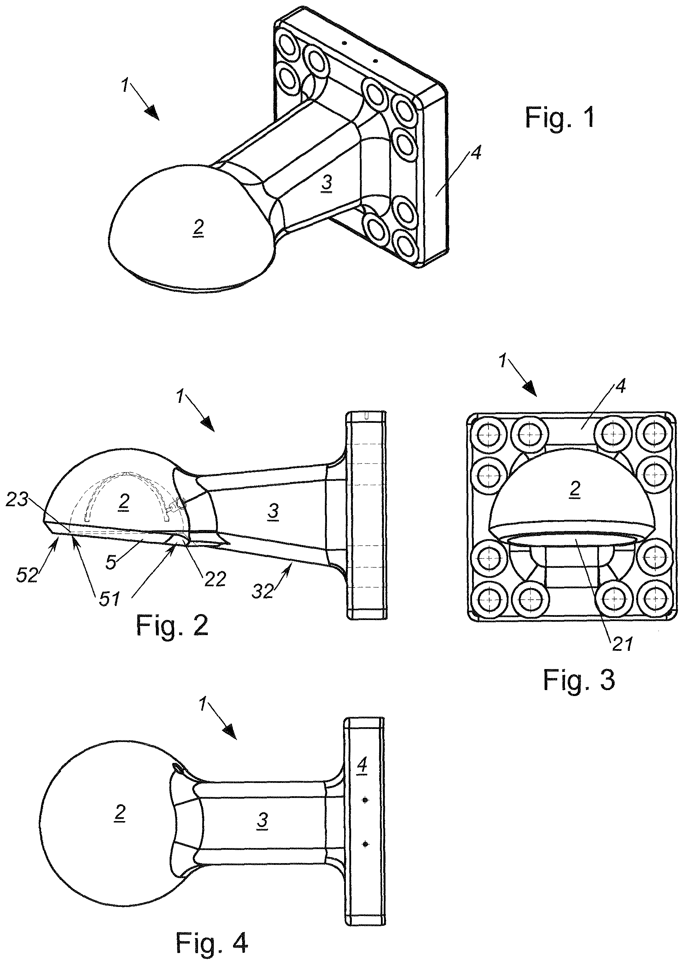

Die Fig. 1 bis 4 zeigen eine Hochlastzugöse 1 für einen Fahrzeuganhänger mit einer halbkugelförmigen Aufnahmepfanne 2 für die Aufnahme einer Kupplungskugel, einem Befestigungsflansch 4 für die Befestigung mit dem Fahrzeuganhänger und einem die Aufnahmepfanne 2 mit dem Befestigungsflansch 4 verbindenden geraden Schaft 3, wobei die Aufnahmepfanne 2 an der offenen Seite 21 einen Kragen 5 aufweist, wobei der Innendurchmesser des Kragens 5 dem Innendurchmesser der Aufnahmepfanne 2 entspricht.

Die Höhe der Innenseite 51 des Kragens 5 an der dem Schaft 3 zugewandten ersten Seite 22 der Aufnahmepfanne 2 ist größer als an der dem Schaft 3 abgewandten zweiten Seite 23 der Aufnahmepfanne 2.

Derartige Hochlastzugösen 1 werden insbesondere in der Landwirtschaft eingesetzt und weisen üblicherweise Stützlasten größer als 1 Tonne auf. Es können auch Stützlasten von drei oder mehr Tonnen vorgesehen sein.

Die Aufnahmepfanne 2 wird auf eine Kupplungskugel aufgesetzt und auf der Außenseite von einem Niederhalterelement auf der Kupplungskugel gehalten. An der offenen Seite 21 der Aufnahmepfanne wird im Wesentlichen ein Großkreis der Kupplungskugel von der Aufnahmepfanne kontaktiert. Dieser Großkreis wird in weiterer Folge Kontakt-Großkreis bezeichnet.

Der Kragen 5 bildet einen Überstand über die Kupplungskugel und ist mit dieser nicht in Kontakt. Die Höhe des Kragens kann normal auf die von dem Kontakt-Großkreis gebildeten Ebene gemessen werden.

Hebt die Hochlastzugöse 1 im Betrieb von der Kupplungskugel ab, so kommt ein Teil des Kragens 5 mit der Kupplungskugel in Wirkkontakt.

Es hat sich gezeigt, dass an der zweiten Seite 23 eine geringe Höhe des Kragens 5 ausreichend ist. Dabei kann die Höhe des Kragens 5 an der Innenseite 51 im Bereich von 1 mm bis 3 mm gewählt werden.

Durch die geringe Höhe des Kragens 5 an der zweiten Seite 23 kann ein besonders großer Neigewinkel erreicht werden. Der Neigewinkel gibt die maximale Verdrehung der Hochlastzugöse 1 um eine Achse parallel zur Hinterachse des Zugfahrzeuges bei einer Geradeausfahrt-Stellung an.

Ist das Niederhalterelement näher zu der zweiten Seite 23 als zu der ersten Seite 22 angeordnet, so vermindert das Niederhalterelement an der zweiten Seite 23 die Gefahr eines Abhebens der Hochlastzugöse 1.

Auf der ersten Seite 22 kann die Zuverlässigkeit der Hochlastzugöse 1 durch eine größere Höhe des Kragens 5 sichergestellt werden.

Mit dem Befestigungsflansch 4 kann die Hochlastzugöse 1 mit dem Fahrzeuganhänger verschraubt werden. Dabei kann der Befestigungsflansch 4 im Wesentlichen senkrecht zu der Achse des Schaftes 3 stehen, wie bei der in den Fig. 1 bis 4 gezeigten Ausführungsform.

Es kann auch vorgesehen sein, dass der Befestigungsflansch 4 im Wesentlichen parallel zu der Achse des Schaftes 3 steht, also um 90° verdreht zu der in den Fig. 1 bis 4 gezeigten Ausführungsform.

Die Höhe der Innenseite 51 des Kragens 5 an der ersten Seite 22 kann wenigstens das Doppelte, vorzugsweise wenigstens das Dreifache, insbesondere wenigstens des Vierfache der Höhe der Innenseite 51 des Kragens 5 an der zweiten Seite 23 sein.

Als besonders vorteilhaft hat sich gezeigt, wenn die Höhe der Innenseite 51 des Kragens 5 von der ersten Seite 22 zur zweiten Seite 23 im Wesentlichen linear und stetig abnimmt.

Der Kragen 5 kann eine im Wesentlichen ebene Unterseite 52 aufweisen. Dabei ergibt sich eine besonders einfache Geometrie der Hochlast-Zugöse 1.

Die Unterseite 52 kann mit der Achse des Schaftes 3 einen Winkel im Bereich von 5° bis 10°, vorzugsweise im Bereich von 6° bis 8°, einschließen.

Die Unterseite 52 kann mit der Flächennormalen zu der von dem Kontakt-Großkreis gebildeten Ebene einen Winkel im Bereich von 80° bis 95°, vorzugsweise im Bereich von 92° bis 94°, einschließen.

Die Unterseite 52 kann mit der Flächennormalen auf den Befestigungsflansch 4 einen Winkel im Bereich von 5° bis 10°, vorzugsweise im Bereich von 6° bis 8°, einschließen.

Weiters kann vorgesehen sein, dass die Unterseite 52 des Kragens 5 unmittelbar in die Unterseite 32 des Schafts 3 übergeht. Dabei kann eine besonders kompakte Hochlastzugöse 1 bereitgestellt werden. Dabei wird der Neigewinkel auch von dem Schaft 3 begrenzt.

## Patentansprüche

1. Hochlastzugöse (1) für einen Fahrzeuganhänger mit einer halbkugelförmigen Aufnahmepfanne (2) für die Aufnahme einer Kupplungskugel, einem Befestigungsflansch (4) für die Befestigung mit dem Fahrzeuganhänger und einem die Aufnahmepfanne (2) mit dem Befestigungsflansch (4) verbindenden geraden Schaft (3), wobei die Aufnahmepfanne (2) an der offenen Seite (21) einen Kragen (5) aufweist, wobei der Innendurchmesser des Kragens (5) dem Innendurchmesser der Aufnahmepfanne (2) entspricht, **dadurch gekennzeichnet, dass** die Höhe der Innenseite (51) des Kragens (5) an der dem Schaft (3) zugewandten ersten Seite (22) der Aufnahmepfanne (2) größer als an der dem Schaft (3) abgewandten zweiten Seite (23) der Aufnahmepfanne (2) ist.

2. Hochlastzugöse nach Anspruch 1, **dadurch gekennzeichnet, dass** die Höhe der Innenseite (51) des Kragens (5) an der ersten Seite (22) wenigstens das Doppelte, vorzugsweise wenigstens das Dreifache, insbesondere wenigstens des Vierfache der Höhe der Innenseite (51) des Kragens (5) an der zweiten Seite (23) ist.

3. Hochlastzugöse nach Anspruch 1 oder 2, **dadurch gekennzeichnet, dass** die Höhe der Innenseite (51) des Kragens (5) von der ersten Seite (22) zur zweiten Seite (23) im Wesentlichen linear und stetig abnimmt.

4. Hochlastzugöse nach Anspruch 1, 2 oder 3, **dadurch gekennzeichnet, dass** der Kragen (5) eine im Wesentlichen ebene Unterseite (52) aufweist.

5. Hochlastzugöse nach Anspruch 4, **dadurch gekennzeichnet, dass** die Unterseite (52) des Kragens (5) unmittelbar in die Unterseite (32) des Schafts (3) übergeht.

## Claims

1. A high-load drawbar eye (1) for a vehicle trailer, comprising a hemispherical receiving socket (2) for receiving a hitch ball, a fastening flange (4) for fastening to the vehicle trailer, and a straight shaft (3) that connects the receiving socket (2) to the fastening flange (4), wherein the receiving socket (2) comprises a collar (5) on the open side (21), wherein the inside diameter of the collar (5) corresponds to the inside diameter of the receiving socket (2), **characterized in that** the height of the inside (51) of the collar (5) is greater on the first side (22) of the receiving socket (2) facing the shaft (3) than on the second side (23) of the receiving socket (2) facing away from the shaft (3).

2. A high-load drawbar eye according to claim 1, **characterized in that** the height of the inside (51) of the collar (5) on the first side (22) is at least twice, preferably at least three times, especially at least four times, the height of the inside (51) of the collar (5) on the second side (23).

3. A high-load drawbar eye according to claim 1 or 2, **characterized in that** the height of the inside (51) of the collar (5) decreases substantially linearly and constantly from the first side (22) to the second side (23).

4. A high-load drawbar eye according to claim 1, 2 or 3, **characterized in that** the collar (5) has a substantially flat bottom side (52).

5. A high-load drawbar eye according to claim 4, **characterized in that** the bottom side (52) of the collar (5) converges directly into the bottom side (32) of the shaft (3).

## Revendications

1. OEillet d'attelage pour charges lourdes (1) pour une remorque de véhicule, avec une chape (2) hémisphérique destinée à recevoir une boule d'attelage, une bride de fixation (4) pour la fixation à la remorque de véhicule et un axe droit (3) reliant la chape (2) à la bride de fixation (4), dans lequel la chape (2) présente un collet (5) sur son côté ouvert (21), le diamètre intérieur du collet (5) correspondant au diamètre intérieur de la chape (2), **caractérisé en ce que** la hauteur de la face intérieure (51) du collet (5) sur le premier côté (22) de la chape (2) tourné vers l'axe (3) est plus grande que sur le deuxième côté (23) de la chape (2) tourné à l'opposé de l'axe (3).

2. OEillet d'attelage pour charges lourdes selon la revendication 1, **caractérisé en ce que** la hauteur de la face intérieure (51) du collet (5) sur le premier côté (22) est d'au moins deux fois, de préférence au moins trois fois, en particulier au moins quatre fois la hauteur de la face intérieure (51) du collet (5) sur le deuxième côté (23).

3. OEillet d'attelage pour charges lourdes selon la revendication 1 ou 2, **caractérisé en ce que** la hauteur de la face intérieure (51) du collet (5) diminue de façon sensiblement linéaire et constante du premier côté (22) au deuxième côté (23).

4. OEillet d'attelage pour charges lourdes selon la revendication 1, 2 ou 3, **caractérisé en ce que** le collet (5) présente une face inférieure (52) sensiblement plane.

5. OEillet d'attelage pour charges lourdes selon la revendication 4, **caractérisé en ce que** la face inférieure (52) du collet (5) se raccorde sans transition à la face inférieure (32) de l'axe (3).
